# EUROPEAN PATENT APPLICATION

(11) **EP 4 647 400 A1**
(43) Date of publication of application: **12.11.2025**
(21) Application number: 23927109.1
(22) Date of filing: 31.10.2023
(51) Int. Cl.: C01G 45/02, C01G 51/04, C01G 53/04, H01M 4/13, F27D 3/14, B01J 4/00, F23G 7/04

(54) **ROASTING FURNACE, SYSTEM FOR PREPARING LITHIUM BATTERY OXIDE PRECURSOR, AND LITHIUM BATTERY MATERIAL PRECURSOR AND PREPARATION METHOD THEREFOR AND USE THEREOF**

(30) Priority: 10.03.2023 CN 202310260611; 10.03.2023 CN 202310264164
(71) Applicant: HUAYOU NEW ENERGY TECHNOLOGY (QUZHOU) CO., LTD., Quzhou, Zhejiang 324000 (CN); ZHEJIANG HUAYOU COBALT CO., LTD., Jiaxing, Zhejiang 314000 (CN)
(72) Inventor: LI, Fujie, Quzhou, Zhejiang 324000 (CN); SHEN, Zhenlei, Quzhou, Zhejiang 324000 (CN); DONG, Yu, Quzhou, Zhejiang 324000 (CN); NIU, Shuaishuai, Quzhou, Zhejiang 324000 (CN)
(74) Representative: Bryn Aarflot AS
(86) International application number: PCT/CN2023/128020
(87) International publication number: WO 2024/187768

(57) **Abstract**

The present disclosure relates to the technical field of lithium batteries. Provided in the present disclosure are a roasting furnace, a system for preparing a lithium battery oxide precursor, and a lithium battery material precursor and a preparation method therefor and the use thereof. By means of atomization feeding at the bottom of the roasting furnace, after a reaction is conducted in the roasting furnace from bottom to top, a product is output from a particle outlet in the top via negative pressure at the top of the furnace. Since a gas carries the product out from the top of the furnace, the present disclosure, compared with a device that discharges materials from the bottom thereof, achieves long residence time at a pyrolysis temperature, which is beneficial for improving the crystallinity of the product, and the particles are output from the top of the furnace along with the gas, such that the blockage of an atomizer due to the flowing of the particles can be prevented, and the operation stability of the device is improved. In addition, the roasting furnace provided by the present disclosure can further adjust the residence time by adjusting and controlling the negative pressure; and compared with traditional feeding and discharging modes, the temperature of a lower area in the roasting furnace is easier to control, and accurate temperature control, energy conservation and consumption reduction are facilitated.

## Description

### CROSS-REFERENCE TO RELATED APPLICATION

The present disclosure claims priority to Chinese patent application No. 2023102606119, titled "LITHIUM BATTERY MATERIAL PRECURSOR, PREPARATION METHOD AND USE" and application No. 2023102641644, titled "ROASTER AND SYSTEM FOR PREPARING LITHIUM BATTERY OXIDE PRECURSOR" filed with the Chinese Patent Office on March 10, 2023, the entire contents of which are incorporated by reference in the present disclosure.

### TECHNICAL FIELD

The present disclosure relates to the technical field of lithium batteries, and specifically to a roaster (i.e., roasting furnace), and a system for preparing a lithium battery oxide precursor, a lithium battery material precursor, and a preparation method therefor and use thereof.

### BACKGROUND ART

Positive electrode material is one of the key materials for manufacturing the lithium battery, which has a broad market prospect. In the field of lithium batteries, the market size of positive electrode material is the largest. As we all know, the most important part of positive electrode material preparation is precursor material preparation, and the main technical value of positive electrode material is embodied in the precursor process. Therefore, the precursor material preparation technology is very critical.

At present, there are two main methods for synthesizing ternary precursor materials in China.
(1) Controlled crystallization co-precipitation method: the method is to prepare a ternary metal mixed sulfate solution according to the molar ratio, which is then mixed with liquid alkali and ammonia water to generate finished ternary metal hydroxide precipitates, and the precipitates undergo processes such as filtering, drying, pulverization, and demagnetization, to obtain a ternary precursor. More than 90% of the domestic enterprises adopt this method. The production process of the co-precipitation method in the prior art has a long procedure, a large amount of wastewater, a higher production cost, and larger environmental protection pressure. According to statistics, approximately 30 tons of wastewater containing ammonia and heavy metal (sodium sulfate) are produced as a by-product during the production process for each ton of product. The cost of wastewater treatment is very high.
(2) Spray pyrolysis method: the method is to dissolve the nickel, cobalt, and manganese chloride raw materials in water to form a ternary metal mixed solution; and then the precursor solution is atomized by a pressure/two-fluid atomizer device and introduced into the pyrolysis reaction roaster, so that the reaction is completed instantaneously, so as to prepare a large amount of ternary oxide precursors in a short period of time. The spray pyrolysis method for preparing the oxide precursor is a green manufacturing process. Compared with the co-precipitation method synthesis process, it is more efficient, economical, and environmentally friendly. It avoids the generation of sodium sulfate wastewater and ammonia-containing tail gas, and the by-product hydrochloric acid can be recycled to prepare the chloride raw material. The precursor particles prepared by spray pyrolysis process have high consistency in size, narrow particle size distribution, and regular morphology, thereby achieving the uniformity of the atomic level.

However, the spray pyrolysis device disclosed in the prior art has certain design defects from both the process and production perspectives. The main problems are as follows. The atomizer is easy to clog, thereby resulting in discontinuous and unstable reaction process; and the residence duration at the pyrolysis temperature is short, so that the product crystallinity is poor. Therefore, there is an urgent need to improve the structure and process of the prior spray pyrolysis device to solve the current problems.

In view of this, the present disclosure is proposed.

### SUMMARY

An object of the present disclosure is to provide a roaster and a system for preparing the lithium battery oxide precursor, so as to prevent the atomizer from clogging and to extend the residence duration at pyrolysis temperature.

Another object of the present disclosure is to provide a lithium battery material precursor and a preparation method therefor, so as to prevent the atomizer from clogging or to significantly extend the residence duration at the pyrolysis temperature, thereby achieving better crystallinity of the product.

Another object of the present disclosure is to provide a lithium battery positive electrode material, a lithium battery, and an electrical device, so as to enhance the electrochemical performance of the lithium battery positive electrode material or the lithium battery through the improvement of the precursor.

The embodiments of the present disclosure can be realized in the following ways.
In one aspect, the present disclosure provides a roaster, wherein an atomizer for atomizing a raw material into liquid droplets and spraying them upwardly is arranged at a lower part of the roaster; a heating zone is arranged above the atomizer; a particle outlet is arranged above the heating zone; and
the roaster is further provided with an airflow generation assembly, wherein the airflow generation assembly generates upward airflow in the roaster, so that at least a part of the droplets pass through the heating zone upwardly with the airflow and are discharged from a particle outlet.

In an optional embodiment, the airflow generation assembly includes a negative pressure assembly, and the negative pressure assembly includes a fan.

In an optional embodiment, the atomizer includes at least one of an airflow atomizer, a pressure atomizer, and an ultrasonic atomizer.

In an optional embodiment, a heating member for temperature control is arranged on the heating zone, and the roaster is further provided with a temperature measurement assembly.

Optionally, the heating member includes at least one of a burner, an electromagnetic heating member, and a resistance heating component.

In an optional embodiment, the heating member includes burners, and the burners are symmetrical and arranged along a tangent of the roaster body.

In an optional embodiment, a discharge device is arranged in a bottom inner cavity of the roaster; a discharge port is arranged on a bottom wall of the roaster; the discharge port is connected to an inlet of a material bin; an outlet of the material bin is connected to a discharge valve, so as to discharge accumulated materials in the roaster, wherein
the discharge device includes rake teeth mounted on an inner wall of the roaster and a motor for driving the rake teeth to rotate, and the rake teeth extend from one end of the roaster to the other end.

In another aspect, the present disclosure provides a system for preparing the lithium battery oxide precursor, including the roaster of any one of the foregoing embodiments.

In an optional embodiment, a gas-solid separation device is connected to a particle outlet of the roaster; a gas outlet of the gas-solid separation device is connected to an inlet of a dust removal device; and a gas outlet of the dust removal device is communicated with a gas inlet of a pre-concentrator, wherein
a liquid inlet of the pre-concentrator is communicated with a precursor liquid storage tank for mixing a precursor raw material, and the liquid outlet of the pre-concentrator is communicated with the atomizer.

In an optional embodiment, a gas outlet of the pre-concentrator is sequentially connected to a primary absorption tower and a secondary absorption tower, and a gas outlet of the primary absorption tower is communicated with the secondary absorption tower.

In an optional embodiment, an exhaust gas fan, a horizontal droplet separator, and an alkali scrubber are further provided in sequence, wherein a gas outlet of the secondary absorption tower is communicated with the horizontal droplet separator via the exhaust gas fan, and an outlet of the horizontal droplet separator is communicated with the alkali scrubber.

In another aspect, the present disclosure provides a preparation method for the lithium battery material precursor, which is performed by using the roaster according to any one of the above embodiments, including:
atomizing a metal salt precursor solution by an atomizer at a bottom of the roaster; performing evaporation, drying, and decomposition on the atomized material sequentially from bottom to top in the roaster; and carrying generated oxide particles by the gas to discharge from a top of the roaster.

In an optional embodiment, a residence duration of the material in the roaster is controlled by adjusting a flow rate of an airflow.

Optionally, the residence duration of the material in the roaster is 10s~1min.

Optionally, a pressure at a top of the roaster is set as a negative pressure, and an upward airflow within the roaster is generated by using the negative pressure.

Optionally, a flow rate of the airflow in the roaster is adjusted by regulating a magnitude of the negative pressure.

Optionally, the pressure at the top of the roaster is controlled as -0.3 KPa to -0.1 KPa.

In an optional embodiment, an evaporation zone, a drying zone, and a decomposition zone are arranged sequentially from bottom to top in the roaster, and a temperature gradually increases from the evaporation zone to the decomposition zone.

Optionally, a temperature interval of the roaster from bottom to top is 100°C~950°C.

Optionally, a temperature of the evaporation zone is 100°C~200°C; a temperature of the drying zone is 250°C~500°C; and a temperature of the decomposition zone is 550°C~950°C.

Optionally, the decomposition zone includes a first-stage thermal decomposition zone and a second-stage thermal decomposition zone located above the first-stage thermal decomposition zone, wherein a temperature of the first-stage thermal decomposition zone is 650-750°C, and a temperature of the second-stage thermal decomposition zone is 600-700°C.

Optionally, the roaster has a tower height of 5m~20m and an inner diameter of 2m~6m.

Optionally, burners are taken as heating members for temperature control, wherein 3~5 groups of burners are provided, and each group of burners are symmetrical and arranged along a tangent of the roaster body.

In an optional embodiment, the method includes performing a gas-solid separation on a material discharged from the top of the roaster to obtain an exhaust gas and a solid product; performing dust removal on the exhaust gas by a dust removal device, and the exhaust gas entering a pre-concentrator to exchange heat with a metal salt precursor solution; filtering the concentrated metal salt precursor solution and a resultant entering a bottom of the roaster; and performing atomization by the atomizer and spraying upward.

Optionally, the gas-solid separation is performed by using a two-stage cyclone separator, and the separated solid product is dechlorinated, pulverized, and recycled.

Optionally, the exhaust gas enters the dust removal device at a temperature of 300°C-450°C, and a gas outlet temperature of the pre-concentrator is 75°C-90°C.

Optionally, the metal salt precursor solution is filtered and de-ironed before entering the pre-concentrator.

Optionally, the atomizer is selected from any one of a pressure atomizer and a two-fluid nozzle, and an atomized droplet size is controlled as 100 nm~100 µm.

Optionally, a gas used for the two-fluid nozzle is selected from any one of compressed air and nitrogen, wherein a gas pressure is 0.1 MPa~1 MPa, and a gas temperature is 75°C~120°C.

In an optional embodiment, a total concentration of metal elements in the concentrated metal salt precursor solution is 200 g/L~320 g/L, and one or more types of metal elements in the metal salt precursor solution are provided.

Optionally, a preparation process of the metal salt precursor solution includes: mixing and dissolving nickel salt, cobalt salt, and manganese salt, and controlling a total concentration of nickel, cobalt, and manganese elements in the metal salt precursor solution as 120 g/L~200 g/L.

Optionally, the nickel salt, cobalt salt, and manganese salt are all independently selected from at least one of perchlorate salt and chloride salt.

Optionally, the nickel salt, cobalt salt, and manganese salt are all chloride salts.

In an optional embodiment, the cooled exhaust gas discharged from the pre-concentrator enters an absorption tower to absorb an acidic gas, and a tail gas discharged from the absorption tower is discharged after alkali washing.

Optionally, the tail gas discharged from the absorption tower enters an alkali scrubber after passing through an exhaust gas fan and a horizontal droplet separator in sequence, and is inversely contacted with a from-top-to-bottom spray liquid in the alkali scrubber.

Optionally, a process of entering the absorption tower to absorb the acidic gas includes: passing the exhaust gas through a primary absorption tower for primary absorption first; a gas discharged from the primary absorption tower entering the secondary absorption tower for secondary absorption; performing continuous water replenishment on the secondary absorption tower; and returning an acid solution obtained by the secondary absorption to the primary absorption tower as a spray liquid, wherein the primary absorption and secondary absorption are both performed by inversely contacting with the from-top-to-bottom spray liquid in the tower by fillers.

Optionally, a concentration of a regenerated acid solution after the primary absorption is 170 g/L~220 g/L, and a gas temperature of an outlet of the primary absorption tower is 60°C~70°C.

In another aspect, the present disclosure provides a lithium battery material precursor, which is prepared by the preparation method according to any one of the above embodiments.

In another aspect, the present disclosure provides a lithium battery positive electrode material, including the lithium battery material precursor of the above embodiments.

In another aspect, the present disclosure provides a lithium battery, including a lithium battery positive electrode material in the above embodiments.

In another aspect, the present disclosure provides an electrical device, including the lithium battery in the above embodiments.

The present disclosure includes the following beneficial effects. By using the method of atomizing and feeding at the bottom of the roaster, after reacting in the roaster from bottom to top, the product is discharged from the top of the particle outlet by using the negative pressure at the top of the roaster. Since the gas carries the product to discharge from the top of the roaster, the present disclosure has a longer residence duration at the pyrolysis temperature compared with the bottom discharging device, which is beneficial to improve the crystallinity of the product. Since the particles are discharged from the top of the roaster with the gas, which can prevent the particle flow from clogging the atomizer, so as to improve the operation stability of the device. In addition, the roaster provided by the present disclosure can further adjust the residence duration by regulating the magnitude of the negative pressure. Compared to the traditional feeding and discharging methods, the temperature of the lower region in the roaster is easier to control, which is beneficial for precise temperature control and energy conservation and consumption reduction.

### BRIEF DESCRIPTION OF DRAWINGS

In order to more clearly illustrate the technical solutions of the examples of the present disclosure, the drawings to be used in the examples will be briefly introduced below. It should be understood that the following drawings only show certain examples of the present disclosure, and therefore should not be regarded as a limitation of the scope. Other relevant drawings can be obtained from these drawings by a person of ordinary skill in the art without inventive efforts.
FIG. 1 shows a flowchart of a device for preparing oxides by spray pyrolysis in the present disclosure;
FIG. 2 shows an enlarged view of a feeding system in the device process of the present disclosure;
FIG. 3 shows an enlarged view of a burner in the device process of the present disclosure;
FIG. 4 shows a diagram of a roaster bottom material cleaning device in the device process of the present disclosure;
FIG. 5 shows a process flow diagram for the preparation of oxides by spray pyrolysis in the present disclosure;
FIG. 6 shows an SEM image of a product prepared in Example 1 of the present disclosure;
FIG. 7 shows a PSD image of a product prepared in Example 1 of the present disclosure;
FIG. 8 shows an SEM image of a product prepared in Example 2 of the present disclosure;
FIG. 9 shows an XRD image of a product prepared in Example 2 of the present disclosure;
FIG. 10 shows a PSD image of a product prepared in Example 2 of the present disclosure;
FIG. 11 shows an SEM image of a product prepared in Example 3 of the present disclosure;
FIG. 12 shows an XRD image of a product prepared in Example 3 of the present disclosure;
FIG. 13 shows an SEM image of a product prepared in Example 4 of the present disclosure, and in FIG. 13, (a) and (b) represent SEM images at different magnifications;
FIG. 14 shows an SEM image of a product prepared in Example 5 of the present disclosure, and in FIG. 14, (a) and (b) represent SEM images at different magnifications;
FIG. 15 shows an SEM image of a product prepared in Example 6 of the present disclosure;
FIG. 16 shows an XRD image of a product prepared in Example 6 of the present disclosure;
FIG. 17 shows an SEM image of a product prepared in Comparative Example 1 of the present disclosure;
FIG. 18 shows a clogging condition of an atomizer in Comparative Example 1 of the present disclosure;
FIG. 19 shows an SEM image of a product prepared in Comparative Example 2 of the present disclosure, and in FIG. 19, (a) and (b) represent SEM images at different magnifications; and
FIG. 20 shows a clogging condition of an atomizer in Comparative Example 2 of the present disclosure.

Reference numbers: 1-roaster; 2-feeding system; 3-atomizer; 31-liquid inlet pipeline; 32-carrier gas pipeline; 4-heating member; 5-temperature measurement assembly; 6-rake tooth; 7-motor; 8-material bin; 9-discharge valve; 10-gas-solid separation device; 11-circulation pump; 12-dust removal device; 13-jet mill; 14-pre-concentrator; 15-dust removal and material collection device; 16-precursor liquid storage tank; 17-metal liquid feed pump; 18-primary absorption tower; 19-secondary absorption tower; 20-exhaust gas fan; 21-horizontal droplet separator; and 22-alkali scrubber.

### DETAILED DESCRIPTION OF EMBODIMENTS

In order to make the purpose, technical solutions, and advantages of the examples of the present disclosure clearer, the technical solutions in the examples of the present disclosure will be described clearly and completely below in conjunction with drawings in the embodiments of the present disclosure. Obviously, the embodiments described above are partial embodiments of the present disclosure, and not all embodiments. The components of embodiments of the present disclosure generally described and shown in the drawings herein can be arranged and designed in various different configurations.

Accordingly, the detailed description of embodiments of the present disclosure provided in the drawings below is not intended to limit the scope of the present disclosure for which protection is claimed, but only represents selected examples of the present disclosure. Based on the embodiments in the present disclosure, all other embodiments obtained by a person of ordinary skill in the art without inventive efforts all fall within the scope of protection of the present disclosure.

It should be noted that similar symbols and letters denote similar items in the following drawings, so that once an item is defined in a drawing, no further definition or explanation of it is required in the subsequent drawings.

In the description of the present disclosure, it should be noted that the orientation or position relationship indicated by the terms, "up", "down", "inside", "outside", etc., is the orientation or position relationship based on the drawings, or is the orientation or position relationship of the product of the present disclosure customarily placed in use, which are only to facilitate the description of the present disclosure and simplify the description, and are not to indicate or imply that the device or element referred to must have a particular orientation, or be constructed and operated with a particular orientation, and therefore cannot to be understood as limitations of the present disclosure.

Additionally, the terms "first", and "second", etc., are used only to differentiate the description, and are not to be understood as indicating or implying relative importance.

It is noted that features in embodiments of the present disclosure can be combined with each other without conflict.

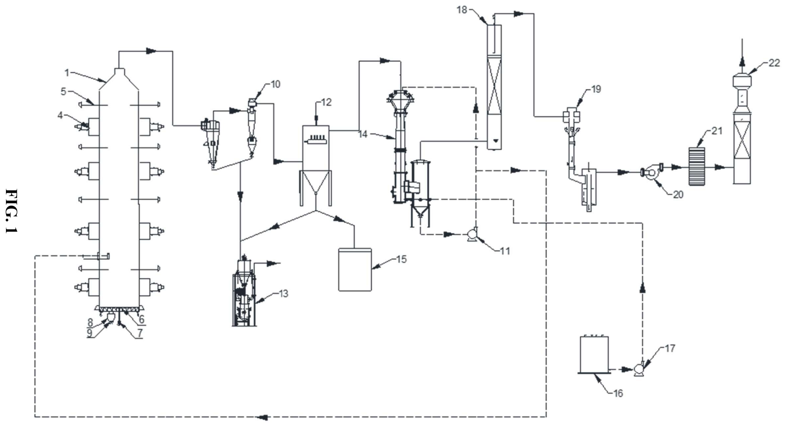

The embodiments of the present disclosure provide a system for preparing the lithium battery oxide precursor. Referring to FIG. 1, it includes a roaster 1, and it uses the roaster 1 to prepare an oxide precursor by using the spray pyrolysis. A product processing unit is connected to the top of the roaster 1, so as to separate and recycle the acidic gas and oxide product in the product by the product processing unit.

In conjunction with FIG. 1-FIG. 3, the roaster 1 is provided with a plurality of groups of heating members 4 and temperature measurement assemblies 5 for temperature control from top to bottom, so as to heat up different regions within the roaster 1 and to detect the temperature simultaneously, thereby achieving a better temperature control effect.

A feeding system 2 is arranged at a position above the heating member 4, which is located at the bottom of the roaster 1, and the feeding system 2 includes an atomizer 3. The atomizer 3 is connected to a liquid inlet pipeline 31 and a carrier gas pipeline 32, so as to atomize the raw material into droplets by the atomizer 3 and to spray them upwardly from the bottom of the roaster 1. A heating zone is arranged above the atomizer 3, and a particle outlet is arranged above the heating zone. The roaster is further provided with an airflow generation assembly, wherein the airflow generation assembly generates upward airflow in the roaster, so that at least a part of the droplets pass through the heating zone upwardly with the airflow and are discharged from a particle outlet.

The number of groups of the heating member 4 and the temperature measurement assembly 5 is unlimited and can be routinely set according to the actual situation. In some embodiments, the roaster 1 has a tower height of 5m~20m, and an inner diameter of 2m~6m; the number of groups of heating members 4 is 3 groups~5 groups, and each group of heating members 4 are symmetrically arranged along the tangent of the roaster body; and the temperature measurement assembly 5 can also be of 3 groups~5 groups. The temperature measurement assembly 5 can be, but is not limited to a thermocouple. By using a plurality of thermocouples (≥ 4 pairs of thermocouples) to measure temperatures of the different height intervals of the roaster 1, it satisfies a tendency that the temperature gradually increases from bottom to top. The heating members 4 and the temperature measurement assemblies 5 can be mounted at intervals as shown in the figure. The heating member 4 can be, but is not limited to the burner, and its structure and working principle will not be repeated herein. The feeding system is located above the lowest burner, and the connected atomizer 3 sprays upwardly, which ensures that the system provides the heat sequentially in an increasing manner from the bottom to top, so that the energy can be comprehensively utilized, and the zoning temperature control is accurate and flexible.

Specifically, the airflow generation assembly includes a negative pressure assembly, and the negative pressure assembly can be a fan (not shown in the figure), but is not limited hereto.

Specifically, the atomizer includes at least one of an airflow atomizer, a pressure atomizer, and an ultrasonic atomizer, such as a two-fluid atomizer. The heating member includes at least one of a burner, an electromagnetic heating member, and a resistance heating component, and all the above commonly used roaster and heating members are within the scope of protection of embodiments of the present disclosure.

Further, the product output from the top of the roaster 1 contains acidic gas (e.g., hydrogen chloride) and oxide product. The gas carries the solid material to discharge from the top and enter into the gas-solid separation device 10 (which can be a cyclone separator); a gas outlet of the gas-solid separation device 10 is connected to an inlet of a dust removal device 12; and a gas outlet of the dust removal device 12 is connected to a gas inlet of a pre-concentrator 14, wherein a liquid inlet of the pre-concentrator 14 is communicated with a precursor liquid storage tank 16 for mixing a precursor raw material, and the liquid outlet of the pre-concentrator 14 is communicated with the feeding system 2. The precursor raw material is preheated and concentrated by the pre-concentrator 14, and then enters into the roaster 1 for reaction. The acidic gas can be cooled down by the pre-concentrator 14, which is beneficial for the subsequent absorption step, and helps prevent the gas from overheating and damaging the fillers when entering the subsequent absorption unit. Specifically, the dust removal device 12 can be a general dust collector used in chemical industry, but is not limited thereto. Any device capable of achieving the dust removal function is within the protection scope of the present disclosure.

Specifically, it performs the gas-solid separation through the gas-solid separation device 10, wherein the exhaust gas output from the gas-solid separation device 10 is hydrogen chloride gas along with a small amount of unseparated micro-powders; the micro-powders entering the dust removal device 12 continue to be captured in the dust removal device 12; after high-temperature dust removal, the gas enters the pre-concentrator 14 and undergoes concurrent contact heat exchange, mass transfer, and cooling with the metal salt precursor solution; the concentrated metal salt precursor solution is filtered and enters a bottom of the roaster; and it sprays upwards after atomized by the atomizer.

In some embodiments, the gas-solid separation device 10 can use a two-stage cyclone separator. The connection method of the outlet device of the two-stage cyclone separator can be one of the following: ①jet mill/dust removal device/slurry tank/filter press/rotary kiln/mixing bin/vibrating screen/electromagnetic iron remover and packaging machine; ②slurry tank/filter press/rotary kiln/jet mill/dust removal device/mixing bin/vibrating screen/electromagnetic iron remover and packaging machine; or ③rotary kiln/slurry tank/filter press/jet mill/dust removal device/mixing bin/vibrating screen/electromagnetic iron remover and packaging machine.

Specifically, the precursor liquid storage tank 16 is communicated with the liquid inlet of the pre-concentrator 14 by the metal liquid feed pump 17, and the liquid outlet of the pre-concentrator 14 is communicated with the feeding system 2 by the circulation pump 11. The circulation pump 11 is further used to discharge the liquid in the pre-concentrator 14 from the bottom and return it to the pre-concentrator 14.

Further, the bottom outlet of the dust removal device 12 is controlled by a flap valve and is respectively communicated with the jet mill 13 and the dust removal and material collection device 15, and the ratio between liquid entering the jet mill 13 and the dust removal and material collection device 15 can be adjusted as needed.

Further, the gas outlet of the pre-concentrator 14 is connected to a primary absorption tower 18, a secondary absorption tower 19, an exhaust gas fan 20, a horizontal droplet separator 21, and an alkali scrubber 22 in sequence, wherein a gas outlet of the primary absorption tower 18 is communicated with the secondary absorption tower 19; a gas outlet of the secondary absorption tower 19 is communicated with the horizontal droplet separator 21 via the exhaust gas fan 20, and an outlet of the horizontal droplet separator 21 is communicated with the alkali scrubber 22. The primary absorption tower 18 and the secondary absorption tower 19 are both used for acidic gas absorption to ensure that the acidic gas is fully absorbed. The absorbed gas is introduced into the horizontal droplet separator 21 for treatment by the exhaust gas fan 20, and is then vented after removing the residual acid by the alkali scrubber 22.

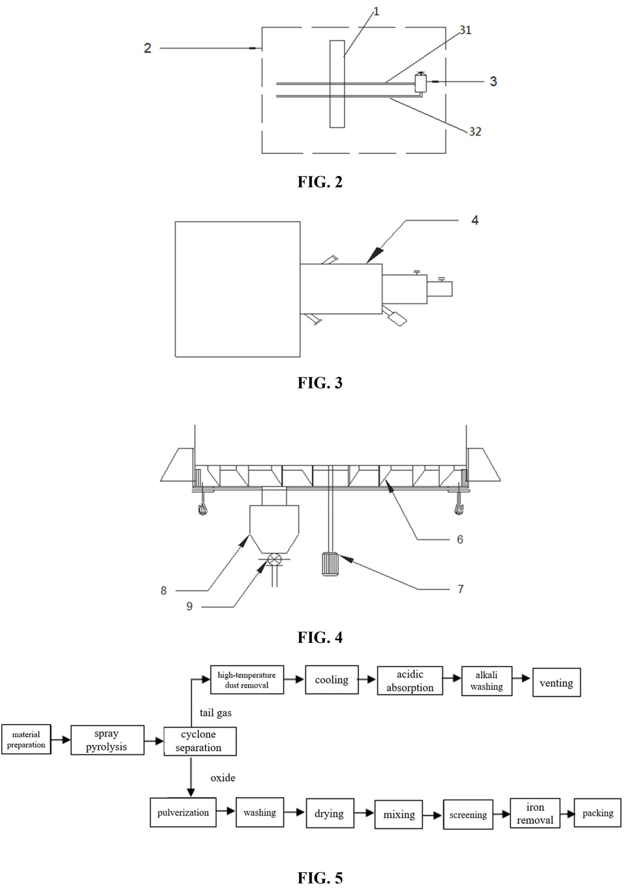

In order to better discharge the accumulated material in the roaster 1, referring to FIG. 1 and FIG. 4, a discharge device is mounted in a bottom inner cavity of the roaster 1; a discharge port is arranged on a bottom wall of the roaster 1; the discharge port is connected to an inlet of a material bin 8; an outlet of the material bin 8 is connected to a discharge valve 9, so as to discharge accumulated materials in the roaster, wherein the discharge valve 9 can be a common star-shaped discharge valve.

In some embodiments, the discharge device includes rake teeth 6 mounted on an inner wall of the roaster 1 and a motor 7 for driving the rake teeth 6 to rotate, wherein the rake teeth 6 can be common vertical horizontal rake teeth. The rake teeth 6 extend from one end of the roaster to the other end, which can collect the accumulated material in the roaster body and then discharge it from the discharge port on the bottom wall of the roaster 1. Then, after passing through the material bin 8, the accumulated material in the roaster during the production process is discharged by the discharge valve 9 and enters the next process.

In order to better understand the operation principle of a roaster and a system for preparing the lithium battery oxide precursor provided by the embodiments of the present disclosure, it is introduced in conjunction with the following preparation method.

The present disclosure provides a preparation method for a lithium battery material precursor, referring to FIG. 1 and FIG. 5, including the following steps: S1~S4.

S1, material preparation.

The metal salt precursor solution is prepared as a raw material for spray pyrolysis and transported to the roaster 1. The specific metal type is prepared as needed. It can be a single-element (Ni/Co/Mn) metal salt solution or a multi-element mixed salt solution prepared in a certain molar ratio, such as a nickel-cobalt-manganese precursor solution.

In some embodiments, the preparation process of the metal salt precursor solution includes: mixing and dissolving the nickel salt, cobalt salt, and manganese salt; controlling the concentration of the metal liquid as 120g/L~200g/L (such as 120g/L, 150g/L, 170g/L, and 200g/L); and controlling the concentration of the metal liquid by regulating the added water volume. The concentration of the metal liquid is a total concentration of the nickel, cobalt, and manganese elements, and a proportion of the nickel, cobalt, and manganese is not limited. It can be proportionally adjusted according to the common types of nickel-cobalt-manganese precursors, for example, the dosage of nickel salt, cobalt salt, and manganese salt is mixed and dissolved in accordance with a molar ratio of Ni, Co, and Mn as x:y:z, where x+y+z=1, and a molar ratio of Ni is 33%-95%, such as 33%, 40%, 50%, 60%, 70%, 80%, 90%, and 95%.

In some embodiments, the nickel salt, cobalt salt, and manganese salt are all independently selected from at least one of perchlorate salt and chloride salt, and can be the perchlorate salt or the chloride salt. Optionally, the nickel salt, cobalt salt, and manganese salt are all chloride salts, that is, adopting nickel chloride, cobalt chloride, and manganese chloride. The by-product of the process is hydrogen chloride.

In some embodiments, the prepared metal salt precursor solution is not directly introduced into the roaster 1, but undergoes heat exchange with the high temperature exhaust gas generated by the roaster 1 in the pre-concentrator 14, wherein the concentration of the concentrated metal salt precursor solution is 200 g/L~320 g/L. The concentrated metal salt precursor solution is transported to the roaster as a raw material.

Specifically, the prepared solution is stored in the precursor liquid storage tank 16. It is transported to the pre-concentrator 14 via the metal liquid feed pump 17; undergoes heat exchange with the high-temperature roaster gas out of the roaster 1; and is concentrated. The concentrated metal liquid, after being filtered through the pipeline filter according to a set flow rate value, is sent into a spray rod at the lower part of the roaster 1 by the feeding pump, and is atomized into droplets by the atomizer.

S2, spray pyrolysis.

The metal salt precursor solution is atomized by the atomizer at the bottom of the roaster. After the atomized material passes through the evaporation zone, drying zone, and decomposition zone sequentially from bottom to top in the roaster, the gas carries the generated oxide particles to discharge from the top of the roaster. After performing a gas-solid separation on a material discharged from the top of the roaster, it obtains an exhaust gas and a solid product. The temperature in the roaster gradually increases from the self-evaporation zone to the decomposition zone, and the temperature interval of the roaster from bottom to top is 100°C~950°C. The temperature interval refers to the lowest temperature at the bottom of the roaster, which can be as low as 100°C, and refers to the highest temperature at the decomposition zone of the roaster, which can be as high as 950°C.

In some embodiments, the atomizer is selected from any one of a pressure atomizer and a two-fluid nozzle, and an atomized droplet size is controlled as 100 nm~100 µm to ensure uniformity of the atomized droplets. The pressure atomizer and the two-fluid nozzles are both prior atomization devices, and both are suitable for the processes provided by the embodiments of the present disclosure.

Further, the gas used for the two-fluid nozzle is selected from any one of compressed air and nitrogen, wherein a gas pressure is 0.1 MPa~1 MPa, and the gas is preheated so that the gas temperature is 75°C~120°C.

In the embodiments of the present disclosure, a pressure on a top of the roaster is set as a negative pressure; an upward airflow within the roaster is generated by using the negative pressure; and a flow rate of the airflow in the roaster is adjusted by regulating a magnitude of the negative pressure, so as to control the residence duration of the material in the roaster.

In some embodiments, a temperature of the evaporation zone is 100°C~200°C; a temperature of the drying zone is 250°C~500°C; a temperature of the decomposition zone is 550°C~950°C; the pressure at the top of the roaster is -0.3 KPa to -0.1 KPa; and the residence duration of the material in the roaster is 10s~1min. The roasting device is divided into the evaporation zone, drying zone, and decomposition zone through the precise control of the temperature of each zone. The atomized droplets sequentially undergo the processes of solvent evaporation, solute precipitation, drying, decomposition, and particle agglomeration and sintering, and finally, the oxide precursor and hydrogen chloride gas are produced. The heat energy generated by combustion from bottom to top not only ensures that the material zone is fully reacted, but also has a long residence duration at the pyrolysis temperature, so as to achieve good product crystallinity.

In some embodiments, the decomposition zone can be two stages, including a first-stage thermal decomposition zone and a second-stage thermal decomposition zone located above the first-stage thermal decomposition zone, wherein a temperature of the first-stage thermal decomposition zone can be 650-750°C, and a temperature of the second-stage thermal decomposition zone can be 600-700°C.

Specifically, the temperature of the evaporation zone can be 100°C, 120°C, 150°C, 170°C, 200°C, etc.; the temperature of the drying zone can be 250°C, 300°C, 350°C, 400°C, 450°C, 500°C, etc.; and the temperature of the decomposition zone can be 550°C, 650°C, 700°C, 750°C, 800°C, 850°C, 900°C, 950°C, etc., or any value between the above adjacent values. The temperature field within each temperature control point interval is uniform. The pressure at the top of the roaster can be -0.3KPa, -0.2KPa, -0.1KPa, etc., and the residence duration of the material in the roaster can be 10s, 20s, 30s, 40s, 50s, 60s, etc.

Further, the generated oxide particles and gas along with the negative pressure of the system enter the subsequent gas-solid separation device from the top of the roaster, and are separated to obtain the exhaust gas and the solid product.

S3, tail gas treatment.

The exhaust gas output from the gas-solid separation device 10 (cyclone separator) is hydrogen chloride gas along with a small amount of unseparated micro-powders; the micro-powders entering the dust removal device 12 continue to be captured in the dust removal device; after high-temperature dust removal, the gas enters the pre-concentrator 14 and undergoes concurrent contact heat exchange, mass transfer, and cooling with the metal salt precursor solution; the concentrated metal salt precursor solution is filtered and enters a bottom of the roaster; and it sprays upwards after atomized by the atomizer. The concentration function of the pre-concentrator 14 can preheat the raw material, and can also reduce the temperature of the exhaust gas, so as to prevent the gas from overheating and damaging the fillers when entering the subsequent absorption unit.

In some embodiments, the dust removal device 12 can be 1 or 2 in parallel. The materials in the gas-solid separation device 10 and the dust removal device 12 can be switched, so as to ensure that they can be collected individually or together, and then enter into the subsequent oxide treatment device.

In some embodiments, the temperature of the exhaust gas entering the dust removal device is 300°C-450°C (such as 300°C, 350°C, 400°C, and 450°C), and the metal salt precursor solution can be circulated through the pre-concentrator circulation pump 11 on the pre-concentrator 14, so that the temperature of the gas outlet of the pre-concentrator is 75°C-90°C (such as 75°C, 80°C, 85°C, and 90°C), which facilitates the subsequent absorption process.

In some embodiments, the metal salt precursor solution is filtered and de-ironed before entering the pre-concentrator. The metal salt precursor solution is treated by the filter and iron remover to prevent introduction of impurities.

Referring to FIG. 1 and FIG. 5, the cooled exhaust gas discharged from the pre-concentrator 14 enters an absorption tower to absorb an acidic gas, then the tail gas discharged from the absorption tower is discharged after alkali washing, and is released into the atmosphere. The acidic gas in the exhaust gas can be effectively absorbed through the absorption tower, and taken as the by-product. After the residual acidic gas is reabsorbed through the alkali washing, the exhaust gas meets the emission standard.

In some embodiments, the process of entering the absorption tower to absorb the acidic gas includes: passing the exhaust gas through a primary absorption tower 18 for primary absorption first; a gas discharged from the primary absorption tower entering the secondary absorption tower 19 for secondary absorption; performing continuous water replenishment on the secondary absorption tower 19; and returning an acid solution obtained by the secondary absorption to the primary absorption tower as a spray liquid. By using two-stage absorption, the acidic gases in the exhaust gas can be fully absorbed, thereby improving the utilization rate of the raw material. By regulating the absorption duration, the concentration of the regenerated acid solution after the primary absorption is 170g/L~220g/L (such as 170g/L, 180g/L, 190g/L, 200g/L, 210g/L, and 220g/L), and the gas temperature of the outlet of the primary absorption tower is 60°C~70°C (such as 60°C, 65°C, and 70°C).

Specifically, the cooled gas enters the primary absorption tower 18, in which it is inversely contacted with the from-top-to-bottom spray liquid through filler, so as to absorb the hydrogen chloride gas to form regenerated acid. The incompletely absorbed gas enters the secondary absorption tower 19 for reabsorption. The low-concentration acid solution of the secondary absorption is taken as the spray liquid of the primary absorption, which is returned to the primary absorption tower 18 to increase the regeneration acid concentration. The qualified acid solution is discharged to the qualified acid tank. During the operation process, the secondary absorption tower 19 continuously replenishes with the same amount of demineralized water.

In some embodiments, the tail gas discharged from the absorption tower enters an alkali scrubber 22 after passing through an exhaust gas fan 20 and a horizontal droplet separator 21 in sequence, and is inversely contacted with the from-top-to-bottom spray liquid in the alkali scrubber, so as to reabsorb the residual acidic gas. The gas output from the exhaust gas fan 20 carries a small amount of water, which is removed by gas-liquid separation by the horizontal droplet separator 21, so as to remove moisture.

It should be noted that the whole tail gas treatment process is as follows. The tail gas discharged from the outlet of the gas-solid separation device 10 passes through the dust removal device 12 and then enters the pre-concentrator 14; the solid discharge port at the bottom of the dust removal device 12 is controlled by a flap valve, and is connected to the jet mill 13 and the high temperature dust removal and material collection device 15 respectively; the pre-concentrator 14 is connected to the precursor liquid storage tank 16 through the pipeline; the precursor solution is transported to the pre-concentrator 14 by the metal liquid feed pump 17; and the gas outlet of the pre-concentrator 14 is connected to the primary absorption tower 18, the secondary absorption tower 19, the exhaust gas fan 20, the horizontal droplet separator 21, and the alkali scrubber 22 in sequence. The whole process can be controlled by a DCS control system.

S4, product post-processing.

The solid product separated from the gas-solid separation device 10 is dechlorinated and pulverized, and then is recycled in the form of powder. As shown in FIG. 5, the solid product can further undergo further steps including washing, drying, mixing, screening, and iron removal, so as to obtain a final precursor product, and then it is packaged. The residual impurities on the surface of the oxide are removed by washing. After undergoing drying, screening, and other steps, the product with the particle size meeting the requirement is obtained.

It should be noted that the method of pulverization is not limited, and can be processed by the method of jet mill 13 as shown in FIG. 1.

It should be noted that the embodiments of the present disclosure do not specifically limit the structure of the oxide treatment unit, and oxide treatment systems disclosed in the prior art or oxide treatment devices not disclosed in the new art can be used in the embodiments of the present disclosure.

The embodiments of the present disclosure further provide a lithium battery material precursor, which is prepared by the above preparation method. The reaction is complete and the production has good crystallinity. The precursor can be further used to prepare the lithium battery positive electrode material and the lithium battery, and it facilitates the improvement of the electrochemical performance of the material.

The features and performance of the present disclosure are described in further detail below in conjunction with examples.

It should be noted that the parameters of the roaster used in the following examples are as follows: tower height of the roaster: 10m; inner diameter: 4m; burner 4: 4 groups; temperature-zone temperature-measurement thermocouple: 4 pairs; and top discharge port: 1 unit.

### Example 1

The example provided a preparation method for the lithium battery material precursor, including the following steps (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 130 g/L.

### (2) Spray pyrolysis reaction

The exhaust gas fan was started; the negative pressure at the top of the roaster was controlled as -150Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 130°C; the temperature of the drying zone was set at 300°C; the temperature of the first-stage thermal decomposition zone was set at 720°C; and the temperature of the second-stage thermal decomposition zone was set at 660°C.

The demineralized water was sprayed into the pyrolysis device by a two-fluid nozzle, and then it switched to a ternary metal solution after the temperature of each temperature zone in the roaster was stabilized. The parameters in the process were controlled as follows: the residence duration of the material in the roaster was 50s, and the atomized droplet size was 25µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 220 g/L; the concentrated metal salt precursor solution was filtered and entered a bottom of the roaster; and it sprayed upwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 1.

### (5) Acid recycle

The cooled exhaust gas discharged from the pre-concentrator entered an absorption tower to absorb an acidic gas; the exhaust gas passed through a primary absorption tower for primary absorption first; a gas discharged from the primary absorption tower entered the secondary absorption tower for secondary absorption; the continuous water replenishment was performed on the secondary absorption tower; an acid solution obtained by the secondary absorption was returned to the primary absorption tower as a spray liquid, wherein the primary absorption and secondary absorption were both performed by inversely contacting with the from-top-to-bottom spray liquid in the tower by fillers; the tail gas discharged from the absorption tower entered an alkali scrubber after passing through an exhaust gas fan and a horizontal droplet separator in sequence, and was inversely contacted with the from-top-to-bottom spray liquid in the alkali scrubber; and the tail gas discharged from the absorption tower was discharged after alkali washing.

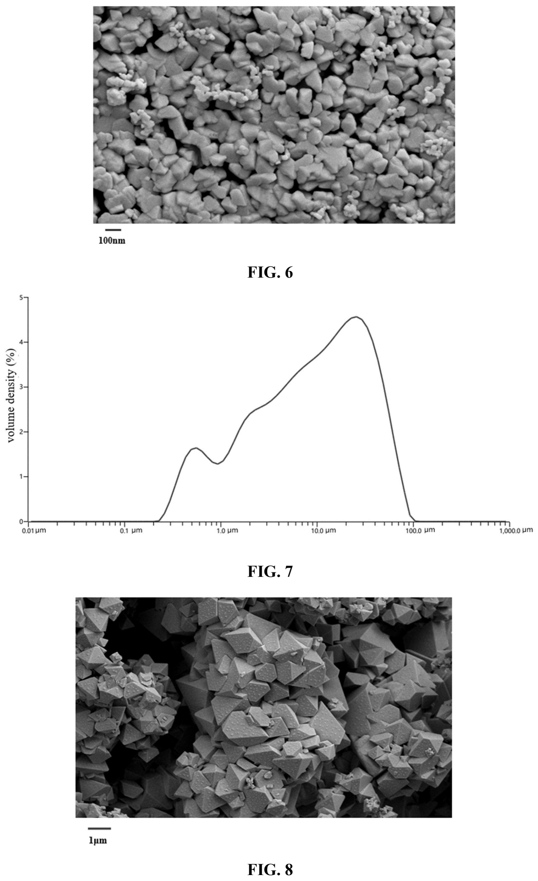

Test analysis: the atomizer is observed for clogging problems, and the collected sample is used for SEM and PSD tests. The results of the ternary 523 oxide particles obtained are shown in FIG. 6 to FIG. 7.

Result analysis: the atomizer is not clogged. From the SEM image, it can be seen that the particle size of primary particles of the product prepared by the two-fluid atomizer is small and irregular. From the PSD image, it can be seen that the particle size distribution of the prepared oxide is wide, with a large diameter ratio and relatively poor consistency.

### Example 2

The example provided a preparation method for the lithium battery material precursor, including the following steps (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 150 g/L.

### (2) Spray pyrolysis reaction

The exhaust gas fan was started; the negative pressure at the top of the roaster was controlled as -200Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 150°C; the temperature of the drying zone was set at 350°C; the temperature of the first-stage thermal decomposition zone was set at 700°C; and the temperature of the second-stage thermal decomposition zone was set at 650°C.

The demineralized water was sprayed into the pyrolysis device by a pressure nozzle, and then it switched to a ternary metal solution after the temperature of each temperature zone in the roaster was stabilized. The parameters in the process were controlled as follows: the residence duration of the material in the roaster was 45s, and the atomized droplet size was 40µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 255 g/L; the concentrated metal salt precursor solution was filtered and entered a bottom of the roaster; and it sprayed upwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 2.

### (5) Acid recycle

The specific steps were the same as in Example 1.

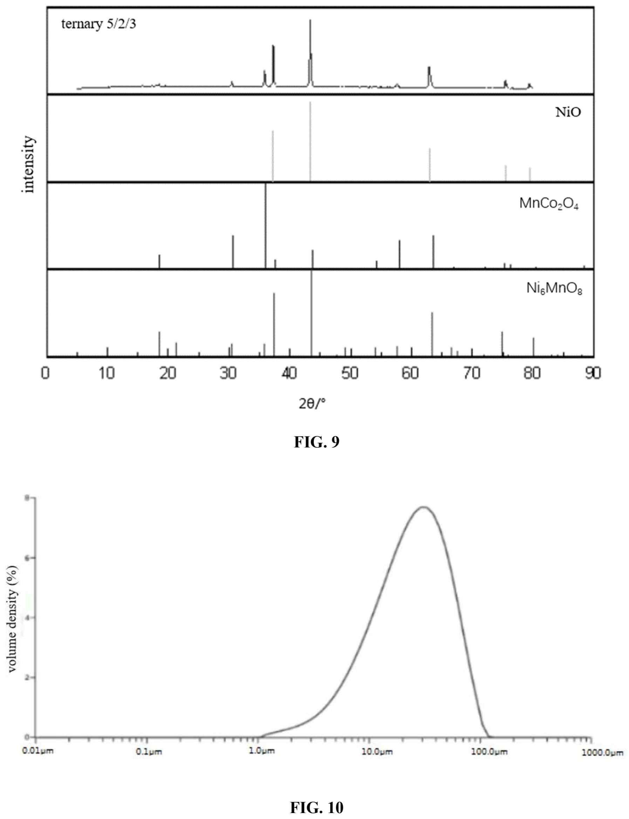

Test analysis: the atomizer is observed for clogging problems, and the collected particles are used for SEM, XRD and PSD tests. The results of the ternary 523 oxide particles obtained are shown in FIG. 8 to FIG. 10.

Result analysis: the atomizer is not clogged. From the SEM image, it can be seen that the oxide particles prepared by the pressure atomizer have better crystallinity, with a single crystal octahedral structure. However, the particle surface is uneven, which is speculated that the relatively low spray pyrolysis temperature prevents the gases generated during the reaction from escaping quickly. From the XRD image, it can be seen that the main compositions of the particles are NiO, Ni₆MnO₈, and MnCo₂O₄, and have high peak intensity, which means that the pyrolysis reaction generated the ternary oxide precursor. From the PSD image, it can be seen that the prepared oxide particles are uniformly dispersed and have relatively good consistency.

### Example 3

The example provided a preparation method for the lithium battery material precursor, including the following steps (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 180 g/L.

### (2) Spray pyrolysis reaction

The exhaust gas fan was started; the negative pressure at the top of the roaster was controlled as -250Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 180°C; the temperature of the drying zone was set at 400°C; the temperature of the first-stage thermal decomposition zone was set at 750°C; and the temperature of the second-stage thermal decomposition zone was set at 700°C.

The demineralized water was sprayed into the pyrolysis device by a pressure nozzle, and then it switched to a ternary metal solution after the temperature of each temperature zone in the roaster was stabilized. The parameters in the process were controlled as follows: the residence duration of the material in the roaster was 40s, and the atomized droplet size was 50µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 280 g/L; the concentrated metal salt precursor solution was filtered and entered a bottom of the roaster; and it sprayed upwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 3.

### (5) Acid recycle

The specific steps were the same as in Example 1.

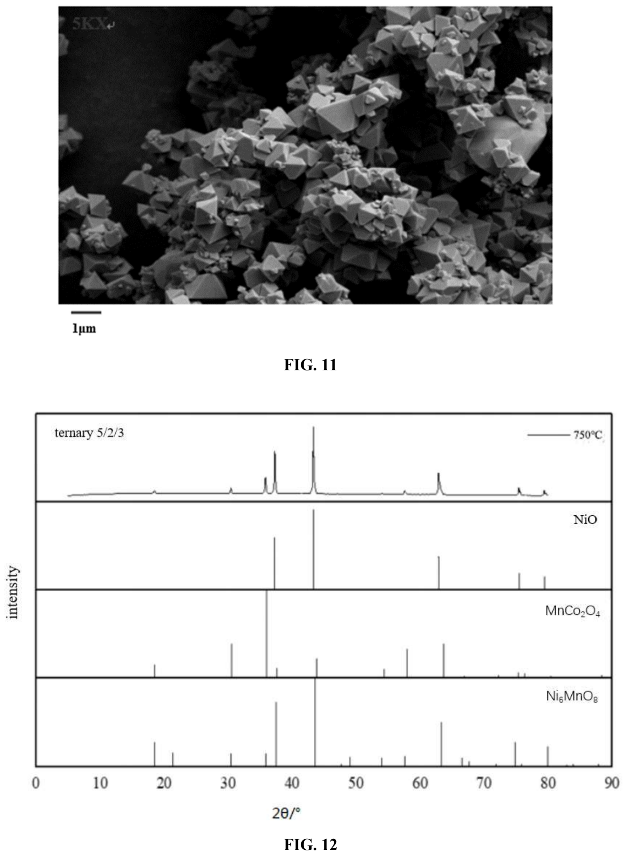

Test analysis: the atomizer is observed for clogging problems, and the collected particles are used for the SEM and XRD tests. The results of the ternary 523 oxide particles obtained are shown in FIG. 11 to FIG. 12.

Result analysis: the atomizer is not clogged. From the SEM image, it can be seen that the oxide particles prepared by the pressure atomizer have better crystallinity, with a single crystal octahedral structure, and the particle surface is smooth. From the XRD image, it can be seen that the main compositions of the particles are NiO, Ni₆MnO₈, and MnCo₂O₄, and have high peak intensity, which means that the pyrolysis reaction generated the ternary oxide precursor.

### Example 4

The example provided a preparation method for the lithium battery material precursor, including the following steps (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 120 g/L.

### (2) Spray pyrolysis reaction

The exhaust gas fan was started; the negative pressure at the top of the roaster was controlled as -100Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 100°C; the temperature of the drying zone was set at 250°C; the temperature of the first-stage thermal decomposition zone was set at 650°C; and the temperature of the second-stage thermal decomposition zone was set at 550°C.

The demineralized water was sprayed into the pyrolysis device by a two-fluid nozzle, and then it switched to a ternary metal solution after the temperature of each temperature zone in the roaster was stabilized. The parameters in the process were controlled as follows: the residence duration of the material in the roaster was 55s, and the atomized droplet size was 25µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 200 g/L; the concentrated metal salt precursor solution was filtered and entered a bottom of the roaster; and it sprayed upwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 4.

### (5) Acid recycle

The specific steps were the same as in Example 1.

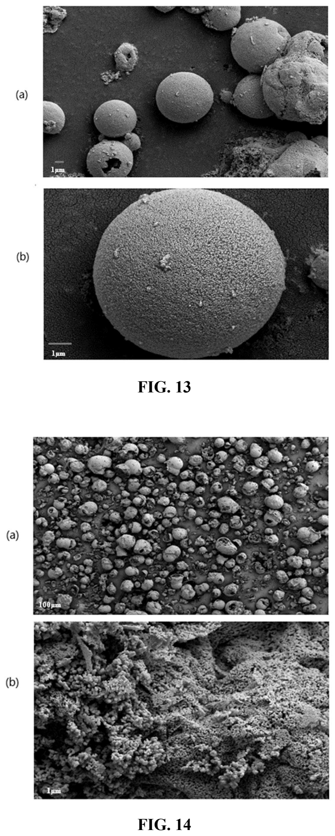

Test analysis: the atomizer is observed for clogging problems, and the collected particles are used for the SEM test. The result of the ternary 523 oxide particles obtained is shown in FIG. 13.

Result analysis: the atomizer is not clogged. From the SEM image, it can be seen that when the temperature of the reaction first-stage thermal decomposition zone and the second-stage thermal decomposition zone were relatively low, the atomized particles are hollow spheres with relatively good sphericity, but the primary particles are small and have no growth.

### Example 5

The example provided a preparation method for the lithium battery material precursor, including the following steps (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 200 g/L.

### (2) Spray pyrolysis reaction

The exhaust gas fan was started; the negative pressure at the top of the roaster was controlled as -300Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 200°C; the temperature of the drying zone was set at 500°C; the temperature of the first-stage thermal decomposition zone was set at 950°C; and the temperature of the second-stage thermal decomposition zone was set at 800°C.

The demineralized water was sprayed into the pyrolysis device by a two-fluid nozzle, and then it switched to a ternary metal solution after the temperature of each temperature zone in the roaster was stabilized. The parameters in the process were controlled as follows: the residence duration of the material in the roaster was 15s, and the atomized droplet size was 100µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 320 g/L; the concentrated metal salt precursor solution was filtered and entered a bottom of the roaster; and it sprayed upwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 5.

### (5) Acid recycle

The specific steps were the same as in Example 1.

Test analysis: the atomizer is observed for clogging problems, and the collected particles are used for the SEM test. The result of the ternary 523 oxide particles obtained is shown in FIG. 14.

Result analysis: the atomizer is not clogged. From the SEM image, it can be seen that when the temperatures of the first/second reaction zones are relatively high, the atomized particles burst under high temperatures, which results in relatively poor sphericality. However, the primary particles with shorter residence duration still grow.

### Example 6

The example provided a preparation method for the lithium battery material precursor, including the following steps (1)~(5).

### (1) Preparation of metal salt precursor solution.

NiCl₂•6H₂O was weighed, and added heat pure water and stirred to prepare a nickel chloride solution with a concentration of 150 g/L.

### (2) Spray pyrolysis reaction

The exhaust gas fan was started; the negative pressure at the top of the roaster was controlled as -200Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 130°C; the temperature of the drying zone was set at 350°C; the temperature of the first-stage thermal decomposition zone was set at 670°C; and the temperature of the second-stage thermal decomposition zone was set at 630°C.

The demineralized water was sprayed into the pyrolysis device by a pressure nozzle, and then it switched to a ternary metal solution after the temperature of each temperature zone in the roaster was stabilized. The parameters in the process were controlled as follows: the residence duration of the material in the roaster was 40s, and the atomized droplet size was 50µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 220 g/L; the concentrated metal salt precursor solution was filtered and entered a bottom of the roaster; and it sprayed upwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 6.

### (5) Acid recycle

The specific steps were the same as in Example 1.

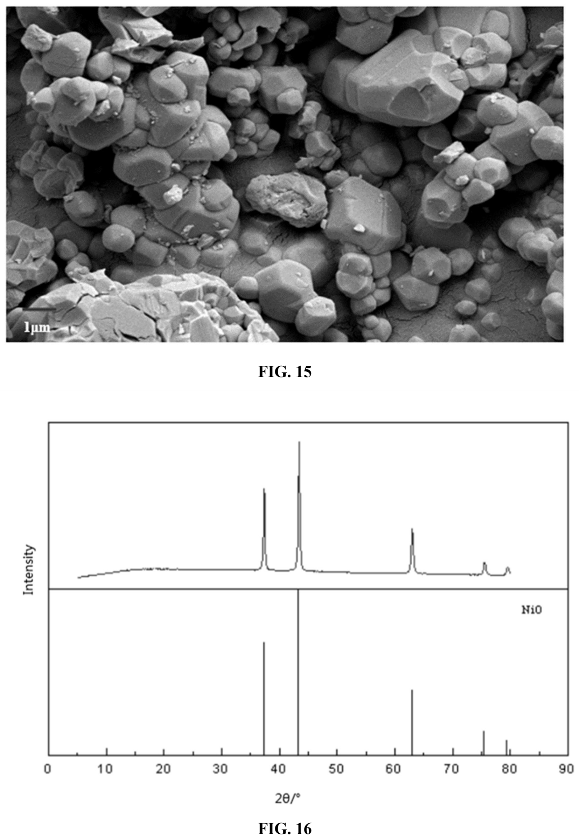

Test analysis: the atomizer is observed for clogging problems, and the collected particles are used for the SEM and XRD tests. The results of the NiO particles obtained are shown in FIG 15 to FIG. 16.

Result analysis: the atomizer is not clogged. From the XRD analysis results, it can be seen that the crystallinity is good, and the sample is relatively pure. The main peak and the secondary strong peak are both NiO phases. Combined with the detection results, the main content of the sample is 77.05%, which is basically consistent with the theoretical value of the sub-nickel.

Overall, both Examples 2-3 and Example 6 have better crystallinity; Examples 1-5 are for the nickel-cobalt-manganese 523 system; Example 1 has a worse effect than Examples 2-3 due to the use of two-fluid feeding; and Examples 4-5 have a worse product crystallinity effect than Examples 2-3 due to the control of parameters such as temperature.

### Comparative Example 1

The comparative provided a preparation method for the lithium battery material precursor, which adopted a roaster top feeding method, and was provided with an evaporation zone, a drying zone, a first-stage thermal decomposition zone, and a second-stage thermal decomposition zone sequentially from top to bottom, including the following steps: (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 180 g/L.

### (2) Spray pyrolysis reaction

The exhaust gas fan was started; the negative pressure at the top of the roaster was controlled as -200Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 180°C; the temperature of the drying zone was set at 400°C; the temperature of the first-stage thermal decomposition zone was set at 750°C; and the temperature of the second-stage thermal decomposition zone was set at 700°C.

The demineralized water was sprayed into the pyrolysis device by a pressure nozzle from the top of the roaster (with the nozzle downward), and then it switched to a ternary metal solution after the temperature of each temperature zone in the roaster was stabilized. The parameters in the process were controlled as follows: the residence duration of the material in the roaster was 20s, and the atomized droplet size was 50µm.

### (3) Utilization of exhaust gas heat

After performing a gas-solid separation by a cyclone separator on a micro-powder material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 280 g/L; the concentrated metal salt precursor solution was filtered and entered a top of the roaster; and it sprayed downwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 7.

### (5) Acid recycle

The specific steps were the same as in Example 1.

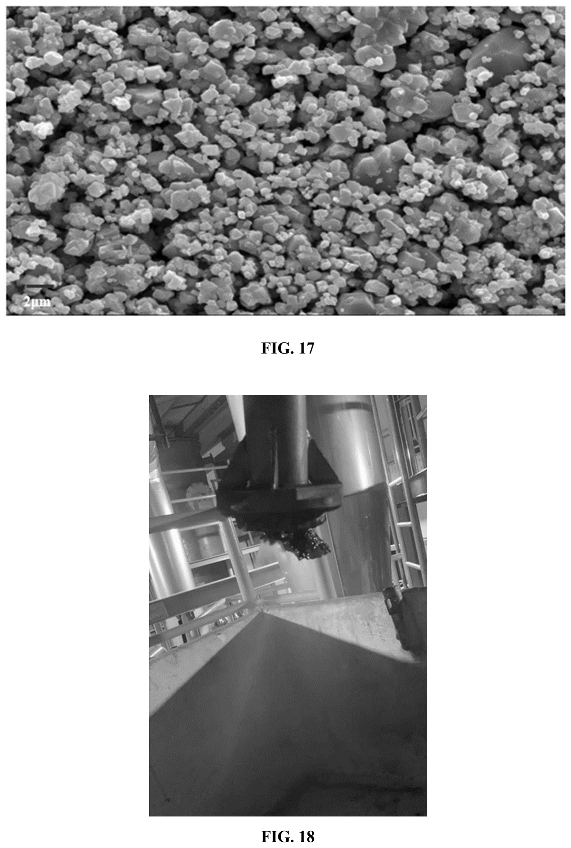

Test analysis: the atomizer is observed for clogging problems, and the collected particles are used for the SEM test. The result of the ternary 523 oxide particles obtained is shown in FIG. 17.

Result analysis: clogging occurs, as shown in FIG. 18. From the SEM image after pulverized, it can be seen that the atomized particles, under the roaster top feeding method, did not form the octahedral structure due to the short residence duration in the roaster, the crystallization is relatively insufficient, and part has the over-burning phenomenon.

### Comparative Example 2

The comparative provided a preparation method for the lithium battery material precursor, which adopted a roaster top feeding method, and was provided with an evaporation zone, a drying zone, a first-stage thermal decomposition zone, and a second-stage thermal decomposition zone sequentially from top to bottom, including the following steps: (1)~(5).

### (1) Preparation of metal salt precursor solution.

A certain mass of NiCl₂•6H₂O, CoCl₂•6H₂O, and MnCl₂•4H₂O according to a molar ratio of Ni: Co: Mn = 0.5: 0.2: 0.3 was accurately weighed, and the heat pure water was added and the resultant was stirred to prepare a solution with the metal (nickel, cobalt, and manganese) concentration of 130 g/L.

### (2) Spray pyrolysis reaction

The exhaust gas fan was started; the negative pressure at the top of the roaster was controlled as -150Pa through the PLC auto-control regulation; the burners were opened at the evaporation zone, drying zone, and decomposition zone in sequence; and the gas volume was automatically adjusted by setting the temperature value, so as to control the temperature of each zone. The temperature of the evaporation zone was set at 130°C; the temperature of the drying zone was set at 300°C; the temperature of the first-stage thermal decomposition zone was set at 720°C; and the temperature of the second-stage thermal decomposition zone was set at 660°C.

The demineralized water was sprayed into the pyrolysis device by a two-fluid nozzle, and then it switched to a metal solution after the temperature of each temperature zone in the roaster was stabilized. The parameters in the process were controlled as follows: the residence duration of the material in the roaster was 25s, and the atomized droplet size was 25µm.

### (3) Utilization of exhaust gas heat

After performing a gas-solid separation by a cyclone separator on a material discharged from the top of the roaster, an exhaust gas and a solid product were obtained; the dust removal was performed on the exhaust gas by a dust removal device, and then the exhaust gas entered a pre-concentrator to exchange heat with a metal salt precursor solution, wherein the concentration of the concentrated metal salt precursor solution was 220 g/L; the concentrated metal salt precursor solution was filtered and entered a top of the roaster; and it sprayed downwards after atomized by the atomizer.

### (4) Material treatment

The solid product entered into the jet mill via the cyclone separator; the pulverized material entered into the slurry tank for washing, the rotary kiln for drying, mixing, screening, and iron removal, etc., and then was collected at the packing stage; and the sample was taken from the ternary oxide prepared by roasting and labeled as Sample 8.

### (5) Acid recycle

The specific steps were the same as in Example 1.

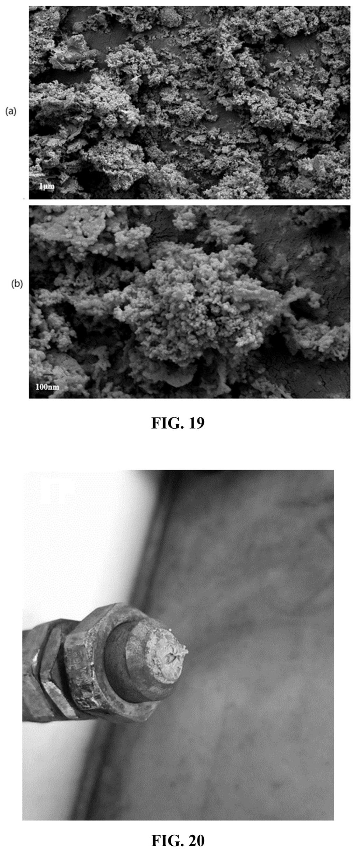

Test analysis: the atomizer is observed for clogging problems, and the collected particles are used for the SEM test. The result of the ternary 523 oxide particles obtained is shown in FIG. 19.

Result analysis: clogging occurs, as shown in FIG. 20. From the SEM image, it can be seen that the two-fluid feeding from the top of the roaster results in a short residence duration for the material, and the reaction is insufficient. It escapes in the form of micro-powders, which results in incomplete growth, and the prepared primary particles are smaller compared to those prepared by the roaster bottom feeding method.

In summary, the examples of the present disclosure provide a roaster and a system for preparing the lithium battery oxide precursor. By using the method of atomizing and feeding at the bottom of the roaster, after reacting in the roaster from bottom to top, the product is discharged from the top of the particle outlet by using the negative pressure at the top of the roaster. Compared to the traditional bottom discharge device, it has the following advantages.
(1) Since the gas carries the product to discharge from the top of the roaster, the present disclosure has a longer residence duration at the pyrolysis temperature compared with the bottom discharging device, which is beneficial to improve the crystallinity of the product.
(2) Since the particles are discharged from the top of the roaster with the gas, which can prevent the particle flow from clogging the atomizer, so as to improve the operation stability of the device.
(3) The residence duration can be adjusted by adjusting the magnitude of the negative pressure.
(4) The traditional inlet and outlet methods cause the temperature at the lower region in the roaster to be difficult to control due to the upward movement of the heat. The device provided by the embodiments of the present disclosure facilitates precise temperature control and energy saving.

The above is only the specific embodiment of the present disclosure, but the scope of protection of the disclosure is not limited hereto. Any changes or replacements that can easily be thought of by a person familiar with the technical field within the technical scope disclosed by the present disclosure shall be covered by the protection scope of the present disclosure. Therefore, the scope of protection of the present disclosure shall be governed by the scope of protection of claims.

### Industrial Applicability

The present disclosure uses the method of atomizing and feeding at the bottom of the roaster. After reacting in the roaster from bottom to top, the product is discharged from the top of the particle outlet by using the negative pressure at the top of the roaster. Since the gas carries the product to discharge from the top of the roaster, the present disclosure has a longer residence duration at the pyrolysis temperature compared with the bottom discharging device, which is beneficial to improve the crystallinity of the product. The solutions of the present disclosure are easy to implement and have very good industrial applicability.

## Claims

1. A roaster, **characterized in that** an atomizer for atomizing a raw material into liquid droplets and spraying them upwardly is arranged at a lower part of the roaster; a heating zone is arranged above the atomizer; a particle outlet is arranged above the heating zone; and
the roaster is further provided with an airflow generation assembly, wherein the airflow generation assembly generates upward airflow in the roaster, so that at least a part of the droplets pass through the heating zone upwardly with the airflow and are discharged from the particle outlet.

2. The roaster according to claim 1, wherein the airflow generation assembly comprises a negative pressure assembly, and the negative pressure assembly comprises a fan.

3. The roaster according to claim 1 or 2, wherein the atomizer comprises at least one of an airflow atomizer, a pressure atomizer, and an ultrasonic atomizer.

4. The roaster according to any one of claims 1-3, wherein a heating member for temperature control is arranged on the heating zone, and the roaster is further provided with a temperature measurement assembly, wherein
optionally, the heating member comprises at least one of a burner, an electromagnetic heating member, and a resistance heating component.

5. The roaster according to claim 4, wherein the heating member comprises burners, and the burners are symmetrical and arranged along a tangent of a roaster body.

6. The roaster according to any one of claims 1-5, wherein a discharge device is arranged in a bottom inner cavity of the roaster; a discharge port is arranged on a bottom wall of the roaster; the discharge port is connected to an inlet of a material bin; an outlet of the material bin is connected to a discharge valve, so as to discharge accumulated materials in the roaster, wherein
the discharge device comprises rake teeth mounted on an inner wall of the roaster and a motor for driving the rake teeth to rotate, and the rake teeth extend from one end of the roaster to the other end.

7. A system for preparing a lithium battery oxide precursor, **characterized by** comprising the roaster according to any one of claims 1-6.

8. The system for preparing the lithium battery oxide precursor according to claim 7, wherein a gas-solid separation device is connected to the particle outlet of the roaster; a gas outlet of the gas-solid separation device is connected to an inlet of a dust removal device; and a gas outlet of the dust removal device is communicated with a gas inlet of a pre-concentrator, wherein
a liquid inlet of the pre-concentrator is communicated with a precursor liquid storage tank for mixing a precursor raw material, and a liquid outlet of the pre-concentrator is communicated with the atomizer.

9. The system for preparing the lithium battery oxide precursor according to claim 8, wherein a gas outlet of the pre-concentrator is sequentially connected to a primary absorption tower and a secondary absorption tower, and a gas outlet of the primary absorption tower is communicated with the secondary absorption tower.

10. The system for preparing the lithium battery oxide precursor according to claim 9, further comprising an exhaust gas fan, a horizontal droplet separator, and an alkali scrubber arranged in sequence, wherein a gas outlet of the secondary absorption tower is communicated with the horizontal droplet separator via the exhaust gas fan, and an outlet of the horizontal droplet separator is communicated with the alkali scrubber.

11. A preparation method for a lithium battery material precursor, **characterized by** comprising:
atomizing a metal salt precursor solution by an atomizer at a bottom of a roaster; performing evaporation, drying, and decomposition on the atomized material sequentially from bottom to top in the roaster; and carrying generated oxide particles by a gas to discharge from a top of the roaster.

12. The preparation method according to claim 11, wherein a residence duration of the material in the roaster is controlled by adjusting a flow rate of an airflow, wherein
optionally, the residence duration of the material in the roaster is 10s~1min;
optionally, a pressure at the top of the roaster is set as a negative pressure, and an upward airflow within the roaster is generated by using the negative pressure;
optionally, a flow rate of the airflow in the roaster is adjusted by regulating a magnitude of the negative pressure; and
optionally, the pressure at the top of the roaster is controlled as -0.3 KPa to -0.1 KPa.

13. The preparation method according to claim 11 or 12, wherein an evaporation zone, a drying zone, and a decomposition zone are arranged sequentially from bottom to top in the roaster, and a temperature gradually increases from the evaporation zone to the decomposition zone, wherein
optionally, a temperature interval of the roaster from bottom to top is 100°C~950°C;
optionally, a temperature of the evaporation zone is 100°C~200°C; a temperature of the drying zone is 250°C~500°C; and a temperature of the decomposition zone is 550°C~950°C;
optionally, the decomposition zone comprises a first-stage thermal decomposition zone and a second-stage thermal decomposition zone located above the first-stage thermal decomposition zone, wherein a temperature of the first-stage thermal decomposition zone is 650-750°C, and a temperature of the second-stage thermal decomposition zone is 600-700°C;
optionally, the roaster has a tower height of 5m~20m and an inner diameter of 2m~6m; and
optionally, burners are taken as heating members for temperature control, wherein 3~5 groups of burners are provided, and each group of burners are symmetrical and arranged along a tangent of a roaster body.

14. The preparation method according to any one of claims 11-13, comprising performing a gas-solid separation on a material discharged from the top of the roaster to obtain an exhaust gas and a solid product; performing dust removal on the exhaust gas by a dust removal device, and the exhaust gas entering a pre-concentrator to exchange heat with the metal salt precursor solution; filtering the concentrated metal salt precursor solution and a resultant entering a bottom of the roaster; and performing atomization by the atomizer and spraying upward, wherein
optionally, the gas-solid separation is performed by using a two-stage cyclone separator, and the separated solid product is dechlorinated, pulverized, and recycled;
optionally, the exhaust gas enters the dust removal device at a temperature of 300°C-450°C, and a gas outlet temperature of the pre-concentrator is 75°C-90°C;
optionally, the metal salt precursor solution is filtered and de-ironed before entering the pre-concentrator;
optionally, the atomizer is selected from any one of a pressure atomizer and a two-fluid nozzle, and an atomized droplet size is controlled as 100 nm~100 µm; and
optionally, a gas used for the two-fluid nozzle is selected from any one of compressed air and nitrogen, wherein a gas pressure is 0.1 MPa~1 MPa, and a gas temperature is 75°C~120°C.

15. The preparation method according to claim 14, wherein a total concentration of metal elements in the concentrated metal salt precursor solution is 200 g/L~320 g/L, and one or more types of metal elements in the metal salt precursor solution are provided, wherein
optionally, a preparation process of the metal salt precursor solution comprises: mixing and dissolving nickel salt, cobalt salt, and manganese salt, and controlling a total concentration of nickel, cobalt, and manganese elements in the metal salt precursor solution as 120 g/L~200 g/L, wherein
optionally, the nickel salt, the cobalt salt, and the manganese salt are all independently selected from at least one of perchlorate salt and chloride salt, and
optionally, the nickel salt, the cobalt salt, and the manganese salt are all chloride salts.

16. The preparation method according to claim 14 or 15, wherein the cooled exhaust gas discharged from the pre-concentrator enters an absorption tower to absorb an acidic gas, and a tail gas discharged from the absorption tower is discharged after alkali washing, wherein
optionally, the tail gas discharged from the absorption tower enters an alkali scrubber after passing through an exhaust gas fan and a horizontal droplet separator in sequence, and is inversely contacted with a from-top-to-bottom spray liquid in the alkali scrubber, wherein
optionally, a process of entering the absorption tower to absorb the acidic gas comprises: passing the exhaust gas through a primary absorption tower for primary absorption first; a gas discharged from the primary absorption tower entering the secondary absorption tower for secondary absorption; performing continuous water replenishment on the secondary absorption tower; and returning an acid solution obtained by the secondary absorption to the primary absorption tower as the spray liquid, wherein the primary absorption and the secondary absorption are both performed by inversely contacting with the from-top-to-bottom spray liquid in the tower by fillers, and
optionally, a concentration of a regenerated acid solution after the primary absorption is 170 g/L~220 g/L, and a gas temperature of an outlet of the primary absorption tower is 60°C~70°C.

17. A lithium battery material precursor, **characterized by** being prepared by the preparation method according to any one of claims 11-16.

18. A lithium battery positive electrode material, **characterized by** comprising the lithium battery material precursor according to claim 17.

19. A lithium battery, **characterized by** comprising the lithium battery positive electrode material according to claim 18.

20. An electrical device, **characterized by** comprising the lithium battery according to claim 19.
